# DEMANDE DE BREVET EUROPEEN

(11) **EP 1 609 398 A1**
(43) Date de publication de la demande: **28.12.2005**
(21) Numéro de dépôt: 04015038.5
(22) Date de dépôt: 25.06.2004
(51) Int. Cl.: A47J 31/00

(54) **Procédé d'amélioration de la production de mousse lors de la préparation de boissons à partir d'une cartouche et dispositif pour sa mise en oeuvre**

(71) Demandeur: NESTEC S.A., 1800 Vevey (CH)
(72) Inventeur: Denisart, Jean-Luc, 1096 Cully (CH); Denisart, Jean-Paul, 1093 La Conversion (CH); Mandralis, Zenon Ioannis, 1071 Chexbres (CH)
(74) Mandataire: Borne, Patrice Daniel

(57) **Abrégé**

Procédé d'obtention d'une boisson moussante à partir d'une cartouche, ladite cartouche étant composée d'au moins une chambre contenant au moins une préparation pour boisson Le procédé comprend l'injection dans ladite cartouche d'un volume prédéterminé de fluide, dont une première partie est constituée essentiellement d'air qui se comprime dans la cartouche à une pression inférieure à la pression d'ouverture de la cartouche ou d'écoulement libre de la boisson au travers de ladite cartouche et dont une seconde partie est constituée d'eau, ou éventuellement d'un mélange d'eau et d'air, qui est injectée à la suite de la première partie dans la cartouche pour permettre l'obtention de la boisson en provoquant une augmentation de la pression interne jusqu'à ouverture de la cartouche ou l'écoulement libre de la boisson au travers de la cartouche permettant ainsi l'évacuation de la boisson et la formation de la mousse.

## Description

L'invention concerne un procédé d'obtention d'une boisson moussante à partir d'un emballage portionné ainsi que le dispositif permettant la mise en oeuvre dudit procédé.

Il est connu de préparer des boissons à partir d'emballages portionnés contenant des ingrédients alimentaires tels qu' une préparation moulue à extraire, une poudre à dissoudre ou un autre agglomérat partiellement ou totalement soluble. Ces ingrédients sont généralement contenus dans des emballages spécifiques telles que des cartouches qui sont introduites dans un dispositif comprenant une alimentation en eau, une pompe capable de délivrer de la pression et un organe d'injection pour introduire de l'eau à l'intérieur de la cartouche. La boisson est obtenue par écoulement au travers d'au moins une paroi après augmentation suffisante de la pression de fluide à l'intérieur de la cartouche. Généralement, la paroi est poreuse par nature ou par déchirement au contact d'éléments perçants ou déchirants lorsqu'une pression prédéterminée de fluide est atteinte à l'intérieur de la cartouche. La boisson obtenue s'écoule alors dans le récipient destiné à la consommation.

Pour de nombreuses boissons chaudes ou froides, la présence de mousse est une qualité très recherchée pour des raisons à la fois gustatives et esthétiques. La mousse est habituellement un système dispersé liquide-gaz, généralement liquide-air, qui nécessite la présence de matière grasse, généralement apportée par la substance alimentaire, ainsi que d'un procédé physique d'agitation permettant de former le système dispersé appelé alors "mousse".

Certaines publications se rapportent à la constitution d'une mousse par apport d'air et/ou de vapeur. Toutefois, l'apport d'air se fait à pression atmosphérique ou basse pression ou il s'agit encore d'un air résiduel; ce qui nuit généralement à la qualité et la quantité de la mousse.

Par exemple, la demande de brevet DE 10247573 décrit l'augmentation de la quantité de mousse pour les cafés filtres au moyen d'un orifice positionné entre le filtre et le récipient de stockage du café qui aspire l'air ambiant du fait de la dépression provoquée par l'écoulement.

Le brevet US 4,581,239 décrit un procédé d'infusion à partir de sachets avec des injections successives d'eau chaude entrecoupées de brassages et le contact éventuel avec un gaz ou de la vapeur. L'introduction d'un gaz se fait à la pression atmosphérique ou sous la pression d'une pompe à gaz afin seulement de contrôler le temps de contact entre l'eau et le produit à infuser.

Le brevet EP 0652 721 B1 décrit un procédé dans lequel une aiguille vient percer un sachet souple pour y injecter un mélange d'air et d'eau, la pression augmente et le sachet se déchire. L'air de ce mélange est en fait de l'air résiduel contenu dans les conduites qui se mélange à l'eau lors de la mise en route du processus d'extraction.

La demande de brevet GB 236 3343 décrit un procédé pour produire de la mousse sur demande à partir d'un système de type venturi. Le procédé consiste à injecter de l'air dans un réservoir sur un liquide à haute teneur en protéines comme du lait, provoquant la formation de mousse. L'injection continue après la formation de la mousse afin de l'expulser hors du réservoir. Ladite mousse est ensuite évacuée à la demande par un conduit séparé de celui d'obtention de la boisson.

La demande de brevet US 2002/0129712 décrit un procédé d'obtention de café crémeux. Dans ce procédé, un dispositif permet d'augmenter la quantité de mousse, ceci par injection d'eau chaude ou de vapeur d'eau durant la purge. Ce procédé permet l'obtention de boissons chaudes qui nécessite une injection d'un fluide à une température comprise entre 150 et 210°F.

La demande de brevet WO 0158786 concerne une cartouche contenant un compartiment contenant un ingrédient pour extraire une boisson et un passage pour l'écoulement de la boisson qui comprend une entrée d'air et des moyens pour générer une réduction de pression du jet de la boisson. Les pressions utilisées pour l'extraction dans le compartiment sont de l'ordre de 0.7 à 2 bars. Ce système apporte une quantité d'air et permet de produire de la mousse dans une disposition de la sortie d'écoulement particulière. Cependant, ce système utilise la dépression créée par l'écoulement de la boisson au travers de la cartouche et donc le volume d'air incorporé est limité. De plus l'air est apporté à des pressions relativement faibles donc les bulles formées sont de grosse taille et la mousse formée est par conséquent peu stable et manque de finesse. Enfin un tel système rend la cartouche plus compliquée et chère à produire.

Certaines publications décrivent aussi l'apport d'air dans l'emballage portionné dans d'autres buts que celui d'améliorer le moussage ou encore sans but particulier.

En particulier, la demande de brevet EP 0250810 A1 décrit un procédé d'extraction de cartouches fermées contenant du café torréfié pour la préparation de boissons dans lequel on prémouille la cartouche avec de l'eau (à une pression d'environ 2 à 3 kg/cm2). Ensuite on injecte de l'air pour aérer le lit de café; l'air prenant alors le volume et obligeant l'eau de prémouillage à occuper un maximum de volume. Enfin on injecte de l'eau jusqu'à une pression comprise entre 3 et 6 kg/cm2 pour finir le mouillage. A la suite de ces trois étapes, on réinjecte de l'eau afin d'augmenter la pression et de percer la cartouche, la pression est alors de l'ordre de 6 à 16 kg/cm2. Toutes ces étapes visent à permettre un meilleur mouillage et une meilleure aération du café dans le but d'optimiser ces arômes dans le cadre de café torréfié moulu.

Les brevets EP 051247, EP 0512142 et EP 468080 décrivent des procédés dans lesquels un mélange d'eau et d'air est injecté dans une cartouche. L'air est aussi de l'air résiduel contenu seulement dans les conduites.

Ces brevets ou demandes de brevets décrivent des procédés d'obtention de boissons généralement chaudes par filtration, dissolution ou extraction d'une substance alimentaire.

Toutefois, il existe un besoin d'améliorer le contrôle de la production et la qualité de la mousse lors de la préparation d'une boisson chaude ou froide obtenue à partir de cartouches.

En effet, la production de mousse pour les boissons à partir de cartouches est difficile, surtout si lesdites boissons sont froides ou à température ambiante, car l'apport d'énergie nécessaire à la formation du système dispersé doit alors être plus important du fait de la plus faible agitation brownienne.

Le volume d'air disponible est aussi généralement insuffisant pour produire une mousse de quantité et de qualité satisfaisante.

Un autre problème est lié au besoin de produire des boissons de volume important et à l'insuffisance d'air disponible dans la cartouche pour produire une mousse en quantité et qualité satisfaisante. En effet, il existe un besoin pour produire à la fois des boissons de grand volume, notamment pour certaines spécialités chaudes ou froides à base de lait, tout en utilisant des tailles de cartouches de taille raisonnable. Or, certains ingrédients rentrant dans la composition des boissons prennent beaucoup de volume dans la cartouche, comme la poudre de lait, par exemple, laissant alors peu ou pas d'espace de tête et donc peu de volume de gaz disponible servant au moussage. Pour obtenir de la mousse, la cartouche doit alors être de taille plus importante pour pouvoir réserver un volume de gaz nécessaire à la création d'une mousse, mais cela pose des problèmes dans la gestion des tailles de cartouches, dans l'adaptation des machines à différentes tailles, dans le coût de la matière d'emballage et d'autres problèmes encore.

De plus, par un apport d'air à basse pression ou à pression atmosphérique, la mousse présente une configuration "savonneuse" avec une majorité de bulles de trop grandes tailles donc une mousse manquant de stabilité. Si l'espace disponible dans la cartouche est réduit, l'apport d'air est alors insuffisant pour produire de la mousse. Pour faire de la mousse, il est alors nécessaire d'employer des systèmes d'agitation mécaniques mais cela rend beaucoup plus complexe le dispositif et/ou la cartouche et la qualité de la mousse reste médiocre.

L'un des objets de la présente invention est donc d'obtenir des boissons chaudes ou froides, à partir de cartouches, présentant un niveau et une qualité de mousse améliorée. Pour cela, la concentration en air dans la cartouche est augmentée par apport d'air de volume contrôlé à l'intérieur de la cartouche. Le fait d'augmenter la concentration en air lors de la préparation des boissons a pour effet une augmentation de l'agitation à l'intérieure de la cartouche et donc l'obtention d'une mousse plus fine, onctueuse, d'une stabilité accrue et en quantité importante.

Un autre objet de l'invention est de proposer un procédé permettant d'obtenir des boissons moussantes dans une large plage de volumes de boissons quel que soit le volume d'occupation des ingrédients à l'intérieur de la cartouche. Un autre objet est de proposer un procédé qui permet d'améliorer les caractéristiques de la mousse dans la préparation de boissons froides.

Enfin, un autre objet est de proposer un dispositif simplifié sans utiliser de systèmes d'injection complexes et/ou de cartouches présentant des systèmes complexe d'admission d'air et de mélange pour faire de la mousse. L'invention concerne donc un procédé d'obtention d'une boisson moussante à partir d'une cartouche, ladite cartouche étant composée d'au moins une chambre contenant au moins une préparation pour boisson caractérisé en ce que:
l'on injecte dans ladite cartouche un volume prédéterminé de fluide, l'injection se faisant :
   - en injectant une phase constituée essentiellement d'air qui se comprime pour former une poche de réserve en air dans la cartouche comprimée à une pression inférieure à la pression d'ouverture de la cartouche ou d'écoulement libre de la boisson au travers de ladite cartouche et ensuite,
   - en injectant une phase comprenant de l'eau qui se mélange à l'air dans la cartouche; la phase d'eau injectée provoquant une augmentation de la pression interne jusqu'à l'ouverture de la cartouche ou l'écoulement libre de la boisson au travers de la cartouche permettant ainsi l'évacuation de la boisson et la formation de la mousse.

Le principe de l'invention est donc principalement de créer une poche de réserve en air qui se comprime dans la cartouche avant que celle-ci ne laisse s'écouler de la boisson en quantité signifiante et de provoquer la mousse par suffisamment d'agitation dans la cartouche; le réglage de l'écoulement se faisant alors par l'augmentation de la pression apportée par la phase d'eau dans la cartouche.

De préférence, le contrôle de l'apport d'air se fait par un volume d'air prédéterminé qui est contenu dans au moins un organe de stockage, lequel se remplit d'air avant chaque cycle d'injection dans la cartouche. Le volume d'air prédéterminé se vide alors lors de chaque cycle d'injection par injection dans la cartouche en formant une réserve d'air comprimé dans la cartouche.

De préférence, le volume de fluide prédéterminé comprend aussi un volume d'eau qui est injecté dans la cartouche en agissant comme un piston de façon à pousser le volume d'air jusqu'à son introduction dans la cartouche. Selon une telle configuration, on s'assure d'une mise sous pression de l'air par l'eau dans la cartouche; ce qui permet d'accumuler une plus grande quantité d'air et de maintenir des cartouches de taille réduites. On réduit aussi les risques de fuites d'air et on garde un système relativement simple à mettre en oeuvre. Enfin, on assure une bonne coordination dans l'injection d'air qui précède l'injection de la partie essentiellement aqueuse. Il est à noter que les phases d'injection d'air puis d'eau peuvent avoir lieu de manière à se chevaucher au sens où de l'air et de l'eau peuvent être injectés en même temps dans la cartouche. Ainsi, une certaine quantité d'air peut être dissoute dans de l'eau lors de l'injection de la phase d'eau. Réciproquement, une certaine quantité d'eau peut être injectée avec la phase d'injection d'air ou avant l'injection d'air résultant, par exemple, de la purge du dispositif de l'eau résiduel se trouvant dans les conduites avant l'arrivée d'air. Il n'en reste pas moins que le principe consiste à créer une poche de réserve en air dans la capsule qui se comprime dans celle-ci; et à apporter de l'eau dans celle-ci qui par brassage se mélange à l'air pour former la boisson, par exemple, dissoudre la préparation, et former en plus la mousse.

Selon un aspect avantageux, le volume d'air prédéterminé est d'au moins 10 centimètres cube. De manière préférée, Le volume d'air prédéterminé est d'au moins 15 centimètres cube, plus préférentiellement au moins 20 centimètres cube et, encore plus préférentiellement, au moins 23 centimètres cube. Les volumes réservés sont bien supérieurs au volumes d'air résiduel contenus dans les conduites de fluide et qui est habituellement éliminé autant que possible. Aussi de tels volumes prévus permettent d'accumuler une quantité de gaz sous pression plus importante dans la cartouche; ce qui permet d'obtenir une plus grande quantité de mousse et des bulles de plus petites tailles; ainsi une mousse d'aspect moins "savonneuse" et par conséquent plus stable.

Dans un mode avantageux possible, le volume d'eau injecté est un volume d'eau non-chauffé permettant la réalisation de boissons moussantes froides. Il est ainsi possible d'obtenir des boissons moussantes à des températures inférieures aux températures habituellement délivrées pour de telles boissons. Il est ainsi offert de proposer des boissons plus désaltérantes mais avec un niveau et une qualité de mousse habituellement réservés aux seules boissons chaudes.

Par boisson moussante on entend toute boisson pouvant être obtenue à partir de cartouches, par exemple du café soluble et/ou moulu, du cappuccino, du thé soluble, du chocolat instantané, du lait en poudre, du jus de fruit, une infusion telle que boisson à base de plantes aromatiques par exemple verveine, camomille, fenouil ou autres.

Par cartouche on entend, par exemple, celle décrite dans la demande de brevet WO 03/059778, dont le contenu est inclus ici par référence, et/ou tout emballage, comprenant au moins une chambre contenant une composition alimentaire, destiné à être reçu par des moyens de réception adaptés d'un dispositif d'extraction ou de dissolution et comprenant des moyens d'alimentation en fluide dans la cartouche.

Par moyens d'ouverture on entend tout moyens qui permettent de vaincre une pression prédéterminée pour faire passer la boisson au travers desdits moyens. Par exemple, ce peut être une membrane faisant partie de la cartouche, avec une ligne d'affaiblissement qui se brise lorsque la pression à l'intérieur de la cartouche dépasse une certaine valeur limite.

Un autre exemple de moyen d'ouverture peut être un ensemble composé d'un moyen de retenue tel qu'une paroi ou membrane placée à l'intérieur de la cartouche et de rugosités et/ou d'éléments perforants qui sous l'action de la pression, au-delà d'un certain seuil prédéterminé de fluide, coopèrent en ouverture par percement ou déchirement de ladite paroi ou membrane de façon à laisser s'écouler ou s'échapper le fluide en dehors de la cartouche.

Par exemple, les éléments perforants ou perçants peuvent faire partie de l'unité de réception de la cartouche et lorsque la pression interne de la cartouche est augmentée, une paroi de ladite cartouche se déforme et vient se percer ou se déchirer au contact desdits éléments perforants. Dans un autre exemple, les éléments perforants ou perçants font partie de la cartouche et agissent sur une paroi ou membrane de la cartouche.

Une autre possibilité peut être un passage fermé de la paroi ou membrane qui s'ouvre, se perce ou se déchire sous l'effet d'une augmentation de pression.

Dans tous les cas, l'augmentation de pression permet une rupture d'une paroi ou membrane de la cartouche et/ou le passage forcé au travers de moyens de retenue de la pression puis l'écoulement de la boisson.

Par écoulement libre on entend l'écoulement de la boisson au travers d'une cartouche comprenant une ou des parois de retenue de pression créant une perte de charge nécessaire à vaincre pour l'écoulement mais sans qu'il soit nécessaire de percer et /ou déchirer cette ou ces parois. Il peut s'agir par exemple d'une paroi poreuse ou d'une paroi présentant un série de chicanes ou de passage(s) tortueux de faible(s) section(s) permettant de créer une perte de charge importante nécessaire à vaincre par une augmentation de pression à l'intérieur de la cartouche pour obtenir l'écoulement du liquide au travers de cette paroi.

Par pression d'ouverture on entend la valeur de pression interne permettant de percer et/ou déchirer, par la mobilisation d'au moins un moyen d'ouverture, tout moyen connu de rétention de la pression comme par exemple une paroi de la cartouche.

Ainsi, de manière préférentielle, la cartouche s'ouvre, pour laisser s'écouler la boisson, par une paroi de la cartouche qui se déchire ou se perce au contact d'éléments de déchirement ou de perçage lorsqu'une certaine pression de fluide à l'intérieur de la cartouche est atteinte.

Par unité de réception de cartouche on entend au moins un moyen pour supporter la cartouche pendant l'obtention du procédé lors de la montée en pression puis l'écoulement de la boisson.

Par mélange d'air et d'eau on entend une phase d'eau dans laquelle de l'air est dispersé.

Par mousse on entend une couche, d'un système dispersé de liquide contenant des bulles de gaz, qui s'établit à la surface d'une portion liquide plus ou moins importante de la boisson notamment après écoulement dans le récipient. Selon une caractéristique de l'invention, la cartouche possède un espace de tête inférieur au volume d'air injecté dans la cartouche. L'espace de tête d'une cartouche est habituellement considéré comme le volume mort non-occupé par la préparation alimentaire dans la chambre de la cartouche.

Dans un mode préféré, le fluide est injecté au moyen d'au moins un jet sous pression à l'intérieur de la cartouche. Lors de l'impact du jet de liquide, en l'occurrence de l'eau ou du mélange eau-air, de l'air est introduit sous le niveau d'eau dans la cartouche et contribue à la formation de mousse. Le jet améliore les phénomènes de brassage qui permettent de former plus rapidement et en plus grand nombres les bulles d'air dans la cartouche. De manière préférée, le fluide est injecté par au moins un jet injecté à partir d'une position excentrée dans la cartouche, et de préférence aussi, orienté dans une direction ne passant pas par le centre de la cartouche, de façon à créer un mouvement de liquide tourbillonnant dans l'enceinte de la cartouche. Un tel mouvement améliore la dissolution de la préparation alimentaire dans la cartouche, notamment lorsque celle-ci remplit un volume important dans la cartouche, mais aussi augmente les interactions eau/air propices à la formation des bulles.

De manière surprenante, le procédé de l'invention est principalement adapté à l'amélioration du moussage des boissons obtenues à partir d'une préparation qui se dissout dans l'eau pendant l'injection. En effet, le procédé selon l'invention ne fonctionne pas aussi bien avec des produits non-solubles comme des produits moulus, par exemple. Dans le cas de produits de ce type, le brassage de l'eau et de l'air a tendance à entraîner les fines qui, étant non solubles, obturent les ouvertures de la cartouches Un moyen de palier à cet inconvénient est de tamiser les produits moulus afin d'éliminer les plupart des fines.

Ainsi, la préparation est donc préférablement du café soluble, du thé soluble, du chocolat instantané, du lait en poudre, du jus de fruit ou une combinaison de ces produits. Par exemple, dans le cas de préparations occupant un large volume dans la cartouche, comme la poudre de lait seule ou en mélange avec d'autres poudres, par exemple, pour la production de boissons comme le cappuccino ou d'autres, la cartouche peut être pratiquement remplie de ladite préparation au départ; et il n'y a rapidement plus d'air disponible dans la cartouche pour former de la mousse. L'apport d'air sous pression est donc nécessaire pour alimenter la cartouche en air. Lors de l'arrivée d'eau dans la cartouche, l'air de plus faible densité que l'eau, a tendance à remonter dans la cartouche, alors que le volume disponible dans la cartouche augmente en raison de la dissolution progressive de la préparation avec l'eau dans la cartouche. L'air maintenu sous pression avant l'ouverture se mélange à l'eau par le brassage créé dans la cartouche; ce qui forme la mousse.

L'invention comprend aussi un dispositif pour la préparation d'une boisson moussante à partir d'une cartouche comprenant une chambre contenant une préparation pour boisson.

Ledit dispositif comprend au moins:
- des moyens de sélection de la boisson désirée pour activer un cycle de préparation de ladite boisson,
- un dispositif d'alimentation en eau,
- un moyen d'apport en air,
- un moyen de transport de fluide,
- une unité de réception d'une cartouche contenant la préparation d'une boisson,
- un organe d'injection de fluide dans la cartouche de manière étanche;
caractérisé en ce qu'un organe de stockage d'air est prévu pour stocker un volume d'air prédéterminé lequel est injecté sous pression dans la cartouche lors de chaque cycle de préparation d'une boisson pour créer une poche de réserve en air comprimé dans la cartouche.

De manière préférée, l'organe de stockage d'air comprend une chambre positionnée après le moyen de transport d'eau. De cette façon, l'air est essentiellement transporté par le flux d'eau sous pression dans le dispositif. Il n'est pas nécessaire de prévoir des circuits d'eau et d'air différents; ce qui simplifie le dispositif. De l'air peut ainsi commencer à se dissoudre et/ou former des bulles dans l'eau avant d'arriver dans la cartouche; ce qui permet d'augmenter encore d'avantage le volume et la qualité de la mousse.

Par organe de sélection de la boisson désirée, on entend une commande manuelle ou électronique, comprenant éventuellement un moyen de mise sous tension du dispositif, permettant la mise en oeuvre du procédé selon l'invention. Cet organe peut aussi, par exemple, servir à choisir le volume de boisson désiré. Cet organe peut être tout organe connu pour ce type d'application et il peut être, par exemple, une vanne manuelle et/ou un tableau de commande électronique associé à un programmateur.

Par dispositif d'alimentation en eau, on entend tout moyen connu pour permettre l'approvisionnement en eau du dispositif lors de la mise en oeuvre du procédé selon l'invention. On peut envisager par exemple un réservoir ou un raccordement au réseau de distribution d'eau.

Par moyen d'apport d'air, on entend tout moyen connu permettant le remplissage d'air de l'organe de stockage d'air de volume déterminé. Le remplissage peut être simplement une mise à l'atmosphère de l'organe de stockage; dans ce cas une ouverture est créée et l'air s'introduit alors dans le circuit afin de remplir l'organe de stockage. Un autre système pourrait être un compresseur qui injecte, sur demande, de l'air dans l'organe de stockage.

Par organe de stockage d'air, on entend une chambre ou cavité permettant de stocker un volume prédéterminé d'air ou de tout autre gaz qui lors de la mise en oeuvre du procédé selon l'invention va conduire à la formation de mousse. Par exemple, l'organe de stockage d'air peut être une chambre d'aération.

Dans le procédé selon l'invention, le volume d'air stocké, puis injecté, est d'un volume supérieur au volume d'air qui pourrait être stocké dans l'espace de tête d'une cartouche. Ainsi, il est possible de concevoir des cartouches de volume aussi restreint que possible, et pour potentiellement offrir la possibilité de délivrer des boissons de plus grands volumes. Cela permet aussi de gérer de manière plus flexible la taille des cartouches et d'économiser en matériaux d'emballage. Ainsi, le procédé selon l'invention peut former un volume de mousse abondant à partir de cartouches dont le rapport entre espace de tête et volume occupé par la préparation non-mouillée dans la cartouche est inférieur à 1:3, même inférieur à 1:5, voire même inférieur à 1:20 ou nul. Dans certains cas comme des préparations à base de lait en poudre, l'espace de tête peut être aussi restreint que possible, voire nul, sans que cela ne soit un désavantage pour la formation de mousse. L'apport d'air peut aussi être ajusté en fonction de l'air déjà disponible dans la cartouche. L'organe d'injection d'air comprend alors des moyens de réglage du volume d'air injecté.

Par moyen de transport d'eau, on entend tout moyen connu permettant de mettre en mouvement un liquide et de créer une pression suffisante à l'intérieur de la cartouche, pour ouvrir la cartouche et permettre ainsi l'écoulement de la boisson. Par exemple, ce moyen peut être une pompe centrifuge et/ou centripète et/ou volumétrique.

Par organe d'injection de l'air et de l'eau on entend un moyen permettant d'introduire de manière étanche un fluide sous pression dans la cartouche, comme par perforation ou par un agencement connexe à la surface d'injection de la capsule. Un exemple préférentiel d'organe d'injection est décrit dans la demande de brevet européenne co-pendante No. 03019163.9 déposée le 25.08.2003 intitulée: "Procédé de préparation d'un produit alimentaire" dont le contenu est incorporé ici par référence. De préférence, l'organe d'injection de fluide est configuré pour percer la cartouche et injecter le fluide sous la forme d'au moins un jet de fluide sous pression. De manière aussi préférentielle, l'organe d'injection est positionné pour à injecter l'eau sous forme d'un jet sous pression de manière excentrée dans la cartouche. Un tel positionnement a pour avantage de créer un mouvement d'eau tourbillonnant ou de "vortex" dans la cartouche; ce qui augmente les interactions entre l'eau et l'air et donc augmente la formation de bulles.

Dans un mode préférentiel, le dispositif comprend aussi au moins un moyen d'ouverture configuré pour résister à la pression de la poche de réserve d'air comprimé et pour s'ouvrir à partir d'une pression correspondant à la pression nécessaire à la préparation de la boisson et la formation de mousse. Il est en effet important de contrôler l'ouverture de la cartouche pour permettre la création de la réserve en air avant l'ouverture de la cartouche. Dans la cas où la cartouche s'ouvrirait trop tôt, l'air se détendrait hors de la cartouche et ne pourrait ainsi pas servir pour former la mousse. L'ouverture de la cartouche doit donc être réglée précisément et s'effectuer après qu'une quantité suffisante d'eau ait été introduite dans la cartouche pour dissoudre la préparation et se mélanger à l'air pour former la mousse.

Dans un mode préférentiel, le moyen d'ouverture comprend, d'une part, une paroi ou membrane et, d'autre part, des rugosités ou éléments perforants qui sous l'action de la pression coopèrent en ouverture par percement ou déchirement de ladite paroi ou membrane. Une telle configuration apporte de la précision dans le réglage de la pression d'ouverture de la cartouche et assure une bonne répétitivité du phénomène. Ainsi, dans un premier mode possible, le moyen d'ouverture appartient à la cartouche. Dans un mode alternatif, la paroi ou membrane du moyen d'ouverture appartient à la cartouche et les rugosités ou éléments perforants appartiennent à l'unité de réception de la cartouche.

Par fluide on entend indifféremment l'air et/ou l'eau seul ou un mélange d'air et d'eau.

Les valeurs de pressions citées dans la présente demande sont des pressions absolues sauf indication contraire.

Les autres caractéristiques et avantages de la présente invention apparaîtront dans la description suivante représentant une version préférée du dispositif permettant la mise en oeuvre du procédé selon l'invention.

Cette version décrite est un exemple non limitatif de l'invention et sa description fera référence aux figures suivantes:
La figure 1 montre un schéma du dispositif permettant l'optimisation de la mousse lors de la préparation de la boisson dans la phase de repos.
La figure 2 montre un schéma du dispositif permettant l'optimisation de la mousse lors de la préparation d'une boisson froide dans la phase de compression de l'air.
La figure 3 montre un schéma du dispositif permettant l'optimisation de la mousse lors de la préparation d'une boisson froide dans la phase d'injection du mélange air-eau.
La figure 4 montre un schéma du dispositif permettant l'optimisation de la mousse lors de la préparation d'une boisson chaude dans la phase de compression de l'air.
La figure 5 montre un schéma du dispositif permettant l'optimisation de la mousse lors de la préparation d'une boisson chaude dans la phase d'injection du mélange air-eau.
La figure 6 est une vue schématique en coupe d'un exemple d'une partie du dispositif selon l'invention comprenant une unité de réception de cartouche, une cartouche et un organe d'injection de fluide, cette partie du dispositif est représentée en position d'ouverture.
La figure 7 est une vue schématique de la partie de dispositif représentée à la figure 6, la partie du dispositif étant représentée en position fermée.
La figure 8 montre un schéma du dispositif permettant l'optimisation de la mousse lors de la préparation de la boisson dans la phase de vidange de l'organe de stockage d'air.

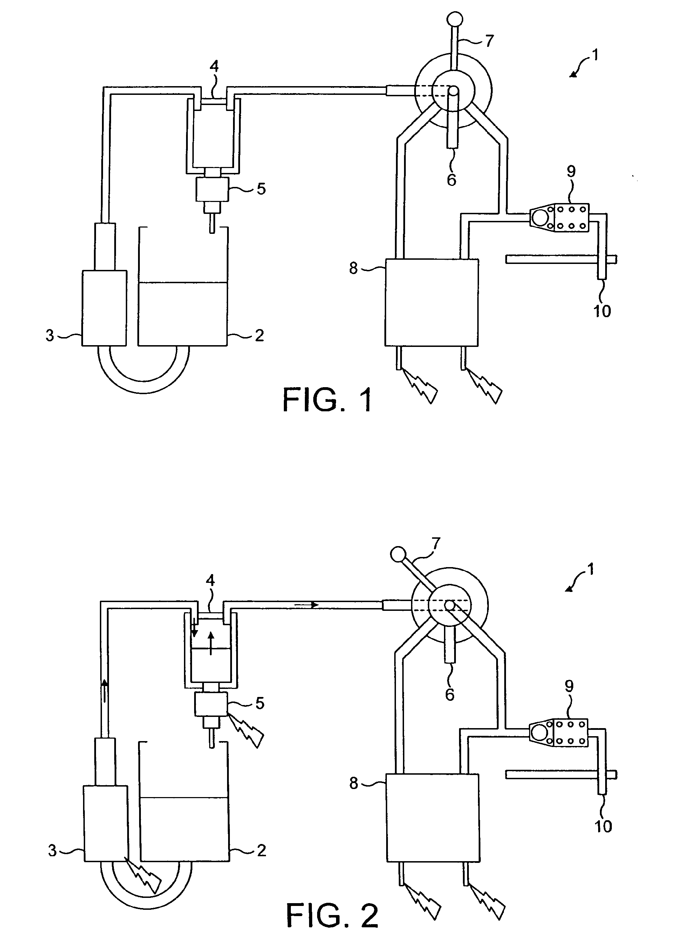

La figure 1 montre une vue générale au repos du dispositif 1 pour la mise en oeuvre du procédé selon l'invention comprenant un réservoir de stockage d'eau 2, un moyen de transport d'eau 3 qui, dans la présente version, est une pompe à piston, qui permet la mise en mouvement du fluide vers l'organe de stockage de l'air qui, ici, est un aérateur 4. Le volume dudit organe de stockage de l'air est déterminé, dans la présente invention ledit volume est d'au moins 10 centimètres cube, préférentiellement au moins 15 centimètres cube, plus préférentiellement au moins 20 centimètres cube et encore plus préférentiellement au moins 23 centimètres cube. L'organe de stockage peut comprendre une chambre réglable en volume afin d'ajuster l'air injecté en fonction de paramètres comme l'espace de tête disponible dans la cartouche, la quantité de mousse désirée, la nature de la préparation, etc. Par exemple, un système réglable peut être une paroi mobile et réglable de la chambre manuellement ou électriquement réglable.

Dans la version représentée, l'organe de stockage d'air est muni d'un moyen de vidange 5, normalement ouvert après chaque cycle permettant de purger l'eau résiduel du circuit et par la même occasion de rétablir le volume d'air prédéterminé. Ce dispositif de vidange peut être tous moyens connus, par exemple une électrovanne ou un clapet. Ce moyen de vidange permet en outre d'éviter l'eau stagnante et donc la croissance de microorganismes.

Le dispositif 1 est également muni d'une alimentation en air 6 qui consiste en une mise à l'atmosphère de l'organe 4. La mise à l'atmosphère est, ici, commandée par une vanne manuelle 7; laquelle est en position de repos et laisse donc le dispositif d'admission d'air ouvert permettant le remplissage en air de l'organe de stockage 4. Lorsque le consommateur souhaite préparer la boisson de son choix, aussi bien chaude que froide, il n'a qu'à actionner la vanne manuelle 7. La mise en mouvement de cette vanne provoque la fermeture de la mise à l'atmosphère 6, ainsi que la fermeture de l'électrovanne 5 de l'aérateur 4. La mise en mouvement de la vanne manuelle permet de fermer le circuit du dispositif avant la mise en pression de la cartouche par le dispositif.

La figure 1 montre aussi la présence d'un organe de chauffage 8 qui permet l'obtention de boissons chaude. La présence de cet organe est facultative pour le procédé de moussage proprement dit car le procédé selon l'invention permet d'obtenir une mousse satisfaisante pour des boissons aussi bien chaudes que froides. Par contre, il est envisageable de munir le dispositif 1 de plusieurs systèmes de chauffe si la réalisation du procédé l'exige. Les organes de chauffe peuvent être tous les moyens de chauffe connus et par exemple un thermobloc ou un système de chauffe instantané comme des résistances ou cartouches chauffantes. Les demandes de brevet EP 125 3844 A1 et WO 2004/006742 décrivent des exemples de moyens de chauffage pouvant être utilisés dans le présent dispositif.

La vanne 7 est mobile selon plusieurs positions; chaque position définissant un circuit de fluide unique. Le choix de la boisson, dans la présente version, est ainsi obtenu selon le sens de la mise en mouvement de la vanne dans une position d'ouverture d'un des circuits.

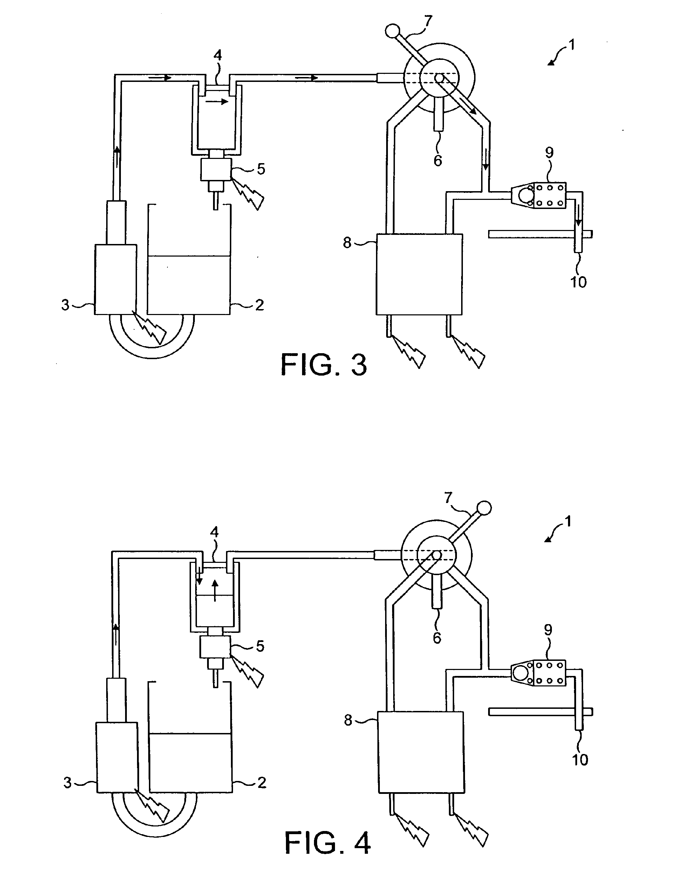

Dans une position montrée à la figure 4, les fluides passent par le thermobloc 8 et la boisson obtenue est alors chaude. Dans une autre position montrée aux figures 2 et 3, les fluides n'empruntent pas le chemin du thermobloc et la boisson obtenue est alors froide.

Une valve de contre-pression 9 est située juste avant l'organe d'injection 10, de préférence, entre la vanne 7 et l'organe d'injection 10. La valve de contre-pression permet de dissoudre une partie de l'air dans l'eau afin de commencer à former des bulles lors de la montée en pression. En effet, cette valve reste fermée jusqu'a l'atteinte d'une pression minimale. Lors de la circulation des fluides, la pression contre cette valve augmente et l'air, qui est le premier fluide dans les conduites, va tout d'abord se comprimer puis se mélanger en partie à l'eau qui est le second fluide et joue le rôle de piston pour pousser en partie l'air. Lorsque la valeur de pression de la valve 9 est atteinte, ladite valve 9 s'ouvre pour laisser passer l'air et le mélange eau-air dissout qui sont alors injectés de manière étanche à l'aide de l'organe d'injection 10 dans une cartouche (non représentée) qui elle-même est liée à une unité de réception de cartouche (non représentée).

Lorsque le dispositif 1 est muni d'un moyen de sélection à commande électronique de la boisson désirée, le dispositif 1 peut être équipé d'un système permettant de contourner l'organe de chauffage si le consommateur désire une boisson froide. Ce système peut être, par exemple, une vanne à double sortie, située en amont de l'organe de chauffe, qui ouvre la sortie correspondant au type de boisson sélectionné. Par exemple, si le consommateur choisit une boisson froide, la sortie proposée par la vanne oblige le fluide à ne pas emprunter le thermobloc.

La figure 2 montre le dispositif permettant l'optimisation de la mousse lors de la préparation d'une boisson froide en phase de compression de l'air. Dans ce cas, la vanne manuelle 7 est actionnée par le consommateur de telle sorte que le seul chemin qui sera proposé aux fluides ne passe pas à proximité et/ou n'emprunte pas le circuit de chauffe 8. L'actionnement de cette vanne manuelle 7 provoque une mise sous tension de la pompe 3 et du moyen de vidange de l'aérateur 5 qui passe alors en position fermée.

L'aérateur ainsi que les conduites sont, à ce moment, pleins d'air puisque le dispositif de mise à l'atmosphère 6, ainsi que le moyen de vidange 5 sont fermés, le dispositif 1 se trouve alors en circuit de mise en pression de la cartouche. L'eau contenue dans le réservoir 2 est alors pompée pour être envoyée dans les conduites jusqu'à l'aérateur 4. L'eau joue alors le rôle de piston pour chasser l'air des conduites en amont de l'aérateur, puis elle chasse l'air de l'aérateur lui-même pour enfin chasser l'air des conduites situées en aval dudit aérateur. Durant toutes ces phases, l'air chassé circule dans les conduites par le seul chemin qui lui est proposé et passe donc par le chemin qui mène à la valve de contre-pression 9 sans emprunter le moyen de chauffe 8. Ladite valve de contre-pression est en position fermée donc l'air comprimé va s'accumuler à son entrée jusqu'à atteindre le seuil de pression permettant alors son ouverture et le passage du fluide.

La figure 3 représente le dispositif 1 permettant l'optimisation de la mousse lors de la préparation d'une boisson froide en phase d'injection du mélange air-eau dans la cartouche. Les composants du dispositif 1 sont tous dans la même position que ceux de la figure 2. Comme décrit ci-dessus, l'eau joue le rôle de piston en chassant l'air du circuit et notamment de l'aérateur 4. L'air chemine alors jusqu'à la valve de contre-pression 9 et vient se comprimer à l'entrée de celle-ci. La pompe 3 continue d'envoyer de l'eau dans le circuit, l'eau circule par le seul chemin qui lui est proposé et provoque alors une augmentation de la pression dans le circuit et par conséquent à l'entrée de la valve de contre-pression. L'intérêt de cette valve de contre-pression est justement de provoquer cette compression de l'air et de dissoudre une partie dudit air dans la phase continue d'eau.

Lorsque la pression atteint un certain seuil, la valve de contre-pression s'ouvre et permet alors à l'air, puis au mélange eau-air dissout de la traverser. La pression d'ouverture de cette valve de contre pression est d'au moins 1,015 bars, préférentiellement d'au moins 2 bars, plus préférentiellement d'au moins 3 bars et encore plus préférentiellement d'environ 4 à 5 bars.

Après avoir traversé ladite valve de contre-pression, l'air puis le mélange eau-air dissout sont introduit successivement et/ou simultanément et/ou en partie simultanément et/ou en partie successivement dans la cartouche (non représentée) au moyen d'un organe d'injection 10 et ce de manière étanche.

La figure 4 montre le dispositif 1 permettant l'optimisation de la mousse lors de la préparation d'une boisson chaude en phase de compression de l'air. Dans ce cas, la vanne manuelle 7 est actionnée par le consommateur de telle sorte que le seul chemin qui sera proposé aux fluides passe à proximité et/ou emprunte le moyen de chauffe 8. L'actionnement de cette vanne manuelle 7 provoque une mise sous tension de la pompe 3 et du moyen de vidange de l'aérateur 5 qui passe alors en position fermée. L'aérateur ainsi que les conduites sont, à ce moment, pleins d'air puisque le dispositif de mise à l'atmosphère 6 ainsi que le moyen de vidange 5 sont fermés, le dispositif 1 se trouve alors en circuit de mise sous pression du circuit.

L'eau contenue dans le réservoir 2 est alors pompée pour être envoyée dans les conduites jusqu'à l'aérateur 4. L'eau joue le rôle de piston pour chasser l'air des conduites en amont de l'aérateur, puis elle chasse l'air de l'aérateur lui-même pour enfin chasser l'air des conduites situées en aval dudit aérateur. Durant toutes ces phases, l'air chassé circule dans les conduites par le seul chemin qui lui est proposé et passe donc par le chemin qui mène au thermobloc 8. Il est alors chauffé puis continue jusqu'à la valve de contre-pression 9. Ladite valve de contre-pression est en position fermée ce qui permet à l'air de s'accumuler à son entrée et de se comprimer.

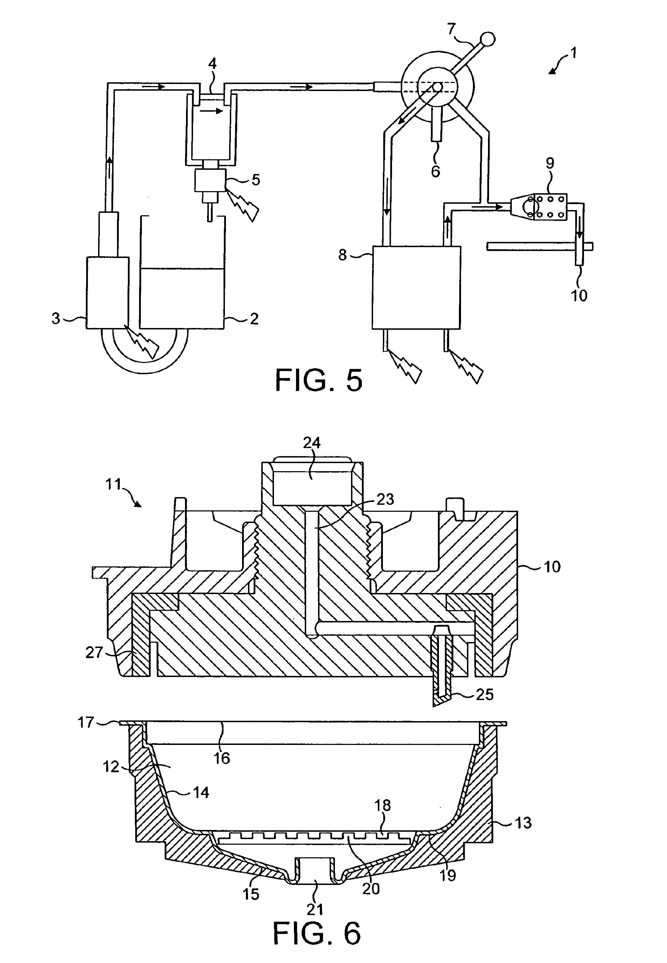

La figure 5 représente le dispositif 1 permettant l'optimisation de la mousse lors de la préparation de boisson chaude en phase d'injection du mélange air-eau. Les composants du dispositif sont tous dans la même position que ceux de la figure 4. Comme décrit ci-dessus l'eau joue le rôle de piston en chassant l'air du circuit et notamment de l'aérateur 4. Ledit air chemine alors par le thermobloc jusqu'à la valve de contre pression 9 et vient se comprimer à l'entrée de celle-ci. La pompe 3 continue d'envoyer de l'eau dans le circuit. L'eau circule par le seul chemin qui lui est proposé. Elle passe donc par le thermobloc ou elle est chauffée jusqu'à la température désirée et chemine ensuite jusqu'à la valve de contre-pression provoquant alors la dissolution d'une partie de l'air ainsi qu'une augmentation de la pression dans le circuit et par conséquent à l'entrée de la valve de contre-pression

Lorsque la pression atteint un certain seuil, la valve de contre-pression s'ouvre et permet alors à l'air, puis au mélange eau-air dissout de la traverser. La pression d'ouverture de cette valve de contre-pression est d'au moins 1,015 bars, préférentiellement d'au moins 2 bars, plus préférentiellement d'au moins 3 bars et encore plus préférentiellement d'environ 4 à 5 bars.

Après avoir traversé ladite valve de contre pression, l'air puis le mélange eau-air dissout sont introduit successivement et/ou simultanément et/ou en partie simultanément et/ou en partie successivement dans la cartouche (non représentée) au moyen d'un organe d'injection 10 et ce de manière étanche. Il faut noter qu'en début de cycle d'injection, une certaine quantité d'eau résiduelle peut être injectée dans la cartouche avant que l'air ne parvienne dans la cartouche. Cette quantité peut provenir de l'eau restant dans les conduites, en particulier entre la vanne 7 et la valve de contre-pression 9. Une telle quantité d'eau n'a aucun effet sur la formation de la poche d'air dans la cartouche et n'affecte en rien le principe de formation de mousse selon l'invention.

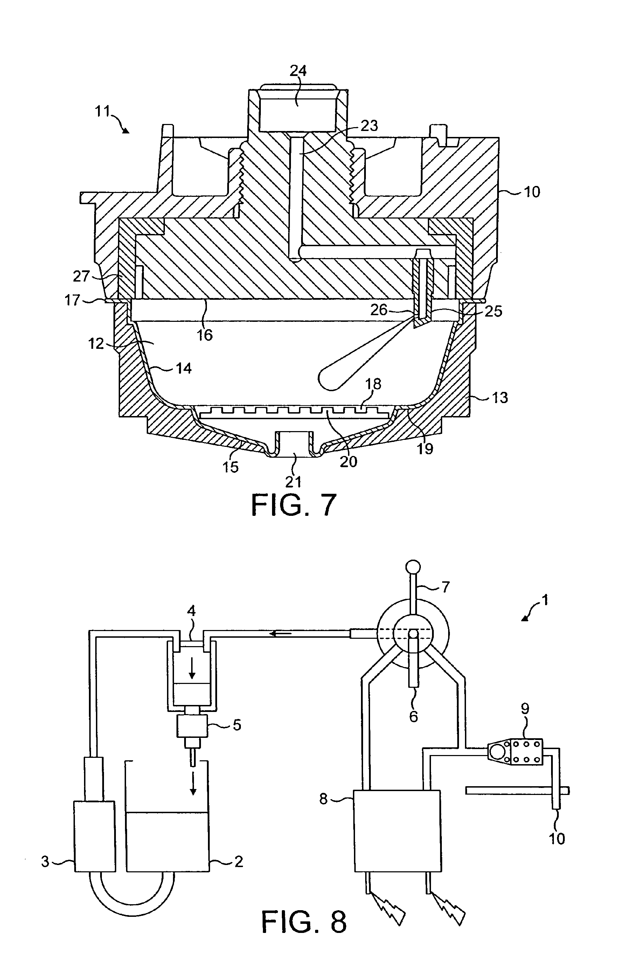

Les figures 6 et 7 montrent une vue schématique en coupe d'un exemple d'une partie du dispositif selon l'invention comprenant une unité de réception de cartouche, une cartouche et un organe d'injection de fluide, cette partie du dispositif est désignée par la référence numérique générale 11.

La cartouche 12 est maintenue dans une position, permettant la réalisation du procédé selon l'invention, grâce à une unité de réception de cartouche 13. La cartouche épouse généralement la forme de son unité de support pour une plus grande stabilité. Cette cartouche 12, généralement en forme de coupelle, contient une substance alimentaire (non représentée). Elle est composée ici d'une paroi latérale 14 ainsi que d'une paroi inférieure 15 définissant un fond. Dans cet exemple, le diamètre du fond 15 est inférieur au diamètre de l'ouverture de la coupelle. A titre indicatif, la paroi latérale 14 et le fond 15 sont typiquement réalisés en un matériau plastique choisi parmi l'ensemble comprenant le EVOH, PVDC, PP, PE, PA en mono-couche ou multicouches. La cartouche est en outre fermée par une paroi supérieure 16 formée par un opercule scellé sur le rebord 17, par exemple par thermosoudage. Ledit opercule 16 est typiquement réalisé en un matériau capable d'être perforé par des moyens de perforation et d'injection du dispositif 11, lesquels sont décrits plus en détails ci-après.

La paroi latérale 14, le fond 15 et l'opercule 16 forment ainsi une chambre dans laquelle la substance alimentaire est contenue. Il est bien entendu que la capsule peut être également une capsule ouverte ou partiellement ouverte. Dans l'exemple représenté, on note que la capsule 12 comprend dans sa partie inférieure un film mince 18 scellé sur un rebord intérieur 19 de la cartouche et fermant la chambre dans sa partie inférieure. Ce film mince 18 est disposé au-dessus d'un disque 20 comprenant une pluralité d'éléments en relief espacés régulièrement à la surface supérieure du disque 20 et formant une pluralité de canaux. Le film mince 18 est destiné à se déchirer au contact des éléments en relief sous l'effet de la montée en pression à l'intérieur de la cartouche 12. Il est important de noter que les moyens d'ouverture sont conçus pour que l'ouverture ne soit pas provoquée trop tôt lors de l'injection de fluide, et notamment, pas lorsque l'air se comprime seul dans la cartouche. En effet, si la membrane se rompt au moment où l'air est comprimé dans la cartouche, l'air va s'échapper sans former de mousse. On notera qu'un orifice d'écoulement 21 est situé sous ce moyen d'ouverture afin de permettre l'obtention de la boisson. Cet orifice d'écoulement 21 est, ici, propre à la capsule 12 ce qui présente l'avantage de pouvoir délivrer un produit directement dans une tasse sans contact direct avec le dispositif 11 et assure une absence de contamination croisée des boissons, une meilleure hygiène, moins de nettoyage et une plus grande simplicité dans la conception même du dispositif de préparation. Pour une description plus détaillée de la cartouche 12, on se référera à la demande de brevet Euro PCT No 03/059778 A2 intitulée "Closed capsule with opening means" déposée le 13 janvier 2003 au nom de la demanderesse et dont le contenu entier est incorporé ici par référence.

Le dispositif 11 comprend l'organe d'injection de fluide 10 de forme générale cylindrique, disposé au-dessus de l'unité de réception de cartouche 13. L'organe d'injection ainsi que l'unité de réception de cartouche sont mobiles verticalement l'un par rapport à l'autre entre la position d'ouverture (figure 6) dans laquelle la cartouche 12 peut être mise en place dans son unité de réception 13 et la position de fermeture (figure7) dans laquelle le dispositif 11 peut être activé.

L'organe d'injection comprend, entre autre, un canal d'amenée 23 du fluide qui s'étend entre un puits d'arrivée 24 du fluide et un élément de perforation et d'injection 25 présentant un orifice d'injection 26. Ledit élément de perforation et d'injection 25 est prévu pour traverser l'opercule 16 et amener l'orifice d'injection 26 à l'intérieure de la cartouche 12 lors du mouvement relatif de l'organe d'injection 10 et de l'unité de réception de cartouche 13 qui amène le dispositif 11 dans la position de fermeture.

Le puits 24 est destiné à être raccordé à un manchon d'alimentation en fluide du dispositif 1. Ledit fluide arrive sous pression, l'organe d'injection 10 forme ainsi un ensemble capable d'injecter un fluide sous la forme d'un jet à partir d'au moins un point d'injection défini par l'orifice d'injection 26. Le nombre de jet est limité de manière à conserver suffisamment de vitesse à l'eau et créer un brassage efficace. De préférence, le nombre de jets est inférieur ou égal à trois. De préférence, il s'agit d'un jet unique. Si le nombre de jets est trop grand, la vitesse est divisée et donc trop basse pour provoquer un brassage suffisant et donc un volume de mousse correct. De préférence aussi, chaque jet (ou l'unique jet) est excentré dans la cartouche de manière à former un mouvement tourbillonnant de fluide dans la cartouche. L'organe d'injection 22 comprend en outre un joint d'étanchéité 27 agencé de telle sorte qu'en position fermée (figure 7), il vienne s'appuyer contre le rebord 17 de la cartouche.

La figure 8 représente le dispositif 1 permettant l'optimisation de la mousse lors de la préparation de boisson en phase de vidange de l'organe de stockage d'air. La vanne manuelle 7 est alors placée en position de repos de telle sorte que le moyen d'alimentation en air 6 permette l'aération du circuit. Ce positionnement de la vanne va désactiver le moyen de vidange 5 de l'organe de stockage d'air 4. Ledit organe de stockage d'air va alors se vider en créant une dépression à l'intérieur du circuit. La dépression induit un vide qui est compensé par l'admission d'air au moyen de l'organe de mise à l'atmosphère 6. Cette étape permet d'une part de remplir d'air l'aérateur 4 ainsi le dispositif 1 est prêt pour la préparation d'une nouvelle boisson moussante et d'autre part de vider l'aérateur de son eau.

Sans cette étape, ledit aérateur ne pourrait pas remplir son rôle de fournisseur d'air et donc de brassage. De plus, la vidange dudit aérateur permet de rétablir le volume d'air prédéterminer ainsi que d'éviter toute stagnation d'eau et par conséquent toute croissance de microorganismes comme par exemple des levures ou des bactéries.

## Revendications

1. Procédé d'obtention d'une boisson moussante à partir d'une cartouche, ladite cartouche étant composée d'au moins une chambre contenant au moins une préparation pour boisson
**caractérisé en ce que**:
l'on injecte dans ladite cartouche (12) un volume prédéterminé de fluide, l'injection se faisant
- en injectant une phase constituée essentiellement d'air qui se comprime pour former une poche de réserve en air dans la cartouche comprimée à une pression inférieure à la pression d'ouverture de la cartouche ou d'écoulement libre de la boisson au travers de ladite cartouche et ensuite,
- en injectant une phase comprenant de l'eau qui se mélange à l'air dans la cartouche; la phase d'eau injectée provoquant une augmentation de la pression interne jusqu'à l'ouverture de la cartouche ou l'écoulement libre de la boisson au travers de la cartouche permettant ainsi l'évacuation de la boisson et la formation de la mousse.

2. Procédé selon la revendication 1, **caractérisé en ce que** le volume de fluide prédéterminé comprend un volume d'air prédéterminé contenu dans au moins un organe de stockage (4), lequel se remplit d'air avant chaque cycle d'injection dans la cartouche (12).

3. Procédé selon la revendication 2, **caractérisé en ce que** le volume de fluide prédéterminé comprend un volume d'eau qui est injecté dans la cartouche (12) en agissant comme un piston de façon à pousser le volume d'air jusqu'à son introduction dans la cartouche (12).

4. Procédé selon la revendication 3, **caractérisé en ce que** le volume d'eau injecté est un volume d'eau non-chauffé permettant la réalisation de boissons moussantes froides.

5. Procédé selon l'une quelconque des revendications 2 à 4, **caractérisé en ce que** le volume d'air prédéterminé est d'au moins 10 centimètres cube.

6. Procédé selon la revendication 5, **caractérisé en ce que** le volume d'air prédéterminé est d'au moins 15 centimètres cube, plus préférentiellement au moins 20 centimètres cube et, encore plus préférentiellement, au moins 23 centimètres cube.

7. Procédé selon l'une quelconque des revendications précédentes, **caractérisé en ce que** la cartouche (12) possède un espace de tête inférieur au volume d'air injecté dans la cartouche.

8. Procédé selon l'une quelconque des revendications précédentes, **caractérisé en ce que** la cartouche s'ouvre, pour laisser s'écouler la boisson, par une paroi de la cartouche qui se déchire ou se perce au contact d'éléments de déchirement ou de perçage lorsqu'une certaine pression de fluide à l'intérieur de la cartouche est atteinte.

9. Procédé selon l'une quelconque des revendications précédentes, **caractérisé en ce que** le fluide est injecté au moyen d'au moins un jet sous pression à l'intérieur de la cartouche.

10. Procédé selon la revendication 9, **caractérisé en ce que** le fluide est injecté par au moins un jet injecté à partir d'une position excentrée dans la cartouche de façon à créer un mouvement de liquide tourbillonnant.

11. Procédé selon l'une quelconque des revendications précédentes, **caractérisé en ce que** la préparation contenue dans la cartouche est une préparation qui se dissout dans l'eau pendant l'injection.

12. Procédé selon la revendication 11, **caractérisé en ce que** la préparation est du café soluble, du thé soluble, du chocolat instantané, du lait en poudre, du jus de fruit, une infusion ou une combinaison de ces produits.

13. Dispositif pour la préparation d'une boisson moussante à partir d'une cartouche comprenant une chambre contenant une préparation pour boisson; ledit dispositif comprenant des moyens de sélection (7) de la boisson désirée pour activer un cycle de préparation de ladite boisson,
- un dispositif d'alimentation en eau (2),
- un moyen d'apport en air (6),
- un moyen de transport de fluide(3),
- une unité de réception (13) d'une cartouche (12) contenant la préparation d'une boisson,
- un organe d'injection de fluide (10) dans la cartouche (12) configuré pour injecter le fluide de manière étanche dans la cartouche;
**caractérisé en ce qu'**un organe de stockage d'air (4) est prévu pour stocker un volume d'air prédéterminé lequel est injecté sous pression dans la cartouche (12) lors de chaque cycle de préparation d'une boisson pour créer une poche de réserve en air comprimé dans la cartouche.

14. Dispositif selon la revendication 13, **caractérisé en ce que** l'organe de stockage d'air comprend une chambre positionnée après le moyen de transport d'eau.

15. Dispositif selon la revendication 13 ou 14, **caractérisé en ce que** l'organe de stockage d'air (4) comprend une chambre d'un volume d'au moins 10 centimètres cube.

16. Dispositif selon la revendication 13, **caractérisé en ce que** l'organe de stockage d'air (4) comprend une chambre d'aération, au moins une entrée d'air pour le remplissage de la chambre, une entrée d'eau et une sortie d'eau en direction de l'organe d'injection (10).

17. Dispositif selon la revendication 16, **caractérisé en ce qu'**il comprend comprenant au moins un moyen de vidange (5) de l'organe de stockage d'air (4) afin d'éviter l'eau stagnante et permettre le remplissage d'air dudit organe de stockage d'air.

18. Dispositif selon l'une quelconque des revendications 13 à 17, **caractérisé en ce qu'**il comprend au moins un organe de chauffage (8) pour chauffer l'eau et permettre l'obtention de boissons chaudes.

19. Dispositif selon la revendication 18, **caractérisé en ce qu'**il comprend un moyen de vanne permettant de contourner l'organe de chauffage pour permettre au consommateur de choisir entre une boisson chaude ou froide.

20. Dispositif selon la revendication 20, **caractérisé en ce qu'**il comprend au moins un moyen d'ouverture configuré pour résister à la pression de la poche de réserve d'air comprimé et pour s'ouvrir à partir d'une pression supérieure correspondant à l'apport de l'eau dans la cartouche.

21. Dispositif selon la revendication 20, **caractérisé en ce que** le moyen d'ouverture comprend, d'une part, une paroi ou membrane et, d'autre part, des rugosités ou éléments perforants qui sous l'action de la pression coopèrent en ouverture par percement ou déchirement de ladite paroi ou membrane.

22. Dispositif selon la revendication 21, **caractérisé en ce que** le moyen d'ouverture appartient à la cartouche.

23. Dispositif selon la revendication 21, **caractérisé en ce que** ) la paroi ou membrane du moyen d'ouverture appartient à la cartouche et les rugosités ou éléments perforants appartiennent à l'unité de réception de la cartouche (13).

24. Dispositif selon l'une quelconque des revendications 13 à 23, **caractérisé en ce qu'**il comprend au moins une valve de contre-pression (9) permettant de dissoudre une partie de l'air dans l'eau avant l'injection de l'eau dans la cartouche (12).

25. Dispositif selon l'une quelconque des revendications 13 à 24, **caractérisé en ce que** l'organe d'injection est configuré pour percer la cartouche et injecter l'eau sous la forme d'au moins un jet sous pression.

26. Dispositif selon l'une quelconque des revendications 24, **caractérisé en ce que** l'organe d'injection est positionné de manière à injecter l'eau à partir d'une position excentrée dans la cartouche.
